# EUROPEAN PATENT APPLICATION

(11) **EP 2 860 288 A1**
(43) Date of publication of application: **15.04.2015**
(21) Application number: 13188274.8
(22) Date of filing: 11.10.2013
(51) Int. Cl.: C25B 1/24, C25B 1/26, C25B 11/12

(54) **Improved electrolytic cell**

(71) Applicant: Solvay SA, 1120 Bruxelles (BE)
(72) Inventor: The designation of the inventor has not yet been filed
(74) Representative: Mross, Stefan P.M.

(57) **Abstract**

An improved electrolytic cell and a process for the manufacture of halogens, especially of F₂, using this cell is described which cell comprises at least one gas diffusion electrode (GDE).

## Description

The present invention concerns an improved electrolytic cell for the manufacture of halogens, especially for the manufacture of elemental fluorine (F₂) from an electrolyte comprising KF and HF, which cell comprises at least one gas diffusion electrode.

In the manufacture of semiconductors, photovoltaic cells, thin film transistor (TFT) liquid crystal displays, and micro-electromechanical systems (MEMS), F₂ can be applied as etching gas, or as a chamber cleaning gas. It may be applied undiluted, i.e. in a concentration of 100%, but often, it is applied diluted by inert gases, for example in concentrations from 1 to 50 % by volume in mixtures, for example, with oxygen, nitrogen and/or argon.

Processes of this kind are described in WO 2007/116033 (which describes the use of fluorine and certain mixtures as an etchant and chamber cleaning agent), WO 2009/080615 (which describes the manufacture of MEMS), WO 2009/092453 (which describes the manufacture of solar cells), and in unpublished WO patent application PCT/EP2010/066109 which concerns the manufacture of TFTs. F₂ used for etching or chamber cleaning is often produced on site by electrolysis of HF in the presence of conducting salts, especially, as mentioned above, in the presence of KF which forms adducts with HF.

A molten HF adduct of KF having the formula KF·(1.8-2.3)HF, is the preferred electrolyte salt. F₂ is electrolytically formed from the HF according to the equation (I) by applying a voltage and passing electric current through the molten salt :

2 HF → F₂ + H₂ (I)

Practically, in the processes of the state of the art, the voltage is often kept in a range of 9 to 11 Volts. The skilled person is well aware that the voltage is in relation e.g. to the amperage, electrolyte composition and temperature. HF is fed into the reactor containing the molten electrolyte salt continuously or intermittently to supply HF.

Electrolytic cells, especially those for F₂ manufacture, are designed according to two basic principles.

Electrolysis may be performed in a cell comprising a vessel which contains the electrolyte and serves as cathode. The cell further comprises at least one anode which extends into the molten electrolyte. Often, 2 or more anodes are applied in the same cell. These anodes are often formed from carbon and may be cylindrical, flat, e.g. they may be present in square form, but principally, they may have any other desired shape.

Alternatively, a vessel is used which is electrically isolated; electric current is provided via at least one anode and at least one cathode which extend into the electrolyte.

In both alternatives, usually a multitude of anodes is present, and in the latter cell, also a multitude of cathodes.

F₂ formed moves through the molten electrolyte in the form of bubbles to the gas space above the anode compartment, or as gaseous film on parts. H₂ formed moves to the space in the cathode chamber in the form of bubbles. It is well known that F₂ is a very reactive gas, and H₂ and F₂ will react very heavily as soon as they come into contact. This is dangerous and results in loss of product and electrical energy, bringing the current efficiency to a range considerably below 100%. Accordingly, in electrolytic cells for fluorine manufacture, a skirt or a comparable means separates the cathode chamber and the anode compartment.

Current cells are designed to provide a compromise between current efficiency and energy efficiency. For energy efficiency, a short distance between the at least one anode and the at least one cathode is desirable. On the other hand, a short distance between anode(s) and cathode(s) may be accompanied by enhanced recombination of H₂ and F₂ to form HF again. This recombination lowers the current efficiency and is also disadvantageous due to the heat formed.

Object of the present invention is to provide electrolytic cells especially for the manufacture of F₂ which provide a purer raw product, preferably a purer F₂, and improved current efficiency, energy efficiency or both. Still another object of the present invention is to provide an improved process for the electrolytic manufacture of halogens, especially of F₂. These objects and other objects are achieved by the invention as outlined in the description and the claims.

The invention concerns an electrolytic cell for the electrolytic manufacture of H₂ and halogens, especially F₂, from a molten electrolyte comprising at least one cathode and at least one anode wherein at least one of the at least one cathode or at least one of the at least one anode is a gas diffusion electrode. The gas diffusion electrode anode may also be denoted as GDE anode and the gas diffusion electrode cathode as GDE cathode, respectively. GDEs are known to be used in fuel cells, where oxygen and hydrogen react at the gas diffusion electrodes, to form water, while converting the chemical bond energy into electrical energy. However, in the state of the art GDE electrodes have not yet been used for electrolysis, in particular not for the electrolysis of an electrolyte salt, for example, such as molten HF adduct of KF for the manufacture of fluorine (F₂). Thus, the invention also concerns the use of at least one GDE electrode in an electrolytic cell for the electrolytic manufacture of H₂ and halogens, especially F₂, from a molten electrolyte.

An important prerequisite for the operation of gas diffusion electrodes is that both the liquid and the gaseous phase coexist in the pore system of the electrodes. A gas diffusion electrode (GDE) as used in the present invention is an electrode with a conjunction of a solid, liquid and gaseous interface, and it is electrically conducting for enabling an electrochemical reaction of the molten electrolyte at the inner surface of the gas diffusion electrode (GDE) and to form the target gas which is completely separated by the gas diffusion electrode from the molten electrolyte and is transported to the opposite not-electrolyte wetted side of the GDE where it is entering the target gas compartment. Therefore, the GDE completely separates the formed target gas from the molten electrolyte. The shape of the GDE may be manifold and can be adapted to a particular cell design. For example, the gas diffusion electrode (GDE) can be an essentially two-dimensionally expanding porous element or the GDE may be in a cylindrically or a cone shaped element, wherein that element besides serving as an electrode also separates the liquid of molten electrolyte from the gas space wherein the produced target gas is collected and withdrawn from. The thickness of the GDE can be in the range of from about 1 mm up to about 5 cm, or even more. Practically, in one embodiment the thickness of the GDE is in the range of about 1 to about 50 mm. In other embodiments a thickness of less than 1 mm is possible, too, for example in the range of 0.3 to 1 mm, provided that electrolyte and gas are sufficiently separated and the electrolyte does not pass from the electrolyte wetted side through the GDE into the target gas compartment. Besides offering an optimal electric conductivity in order to enable an electron transport with low ohmic resistance, therefore the GDE shall also provide for good wetting characteristics for the molten electrolyte without letting the molten electrolyte passing through to the gas space, while to the contrary the formed gas is allowed to easily pass through the diffusion electrode.

### Brief description of the drawings

Figure 1 shows an electrolytic cell having an essentially two-dimensionally expanded gas diffusion electrode (8) as anode.
Figure 2 shows an electrolytic cell which comprises an essentially two-dimensionally expanded gas diffusion electrode as anode (8) and an electrically conducting sheet of expanded metal (12) which serves as cathode.
Figure 3 shows an electrolytic cell which comprises an essentially two-dimensionally expanded gas diffusion electrode as anode (8) and an essentially two-dimensionally expanded gas diffusion electrode type cathode (13).
Figure 4 shows an electrolytic cell having a cylindrical gas diffusion electrode (8) as anode. Of course, as shown here for the anode, analogously also a cathode may be constructed as a cylindrical gas diffusion electrode.

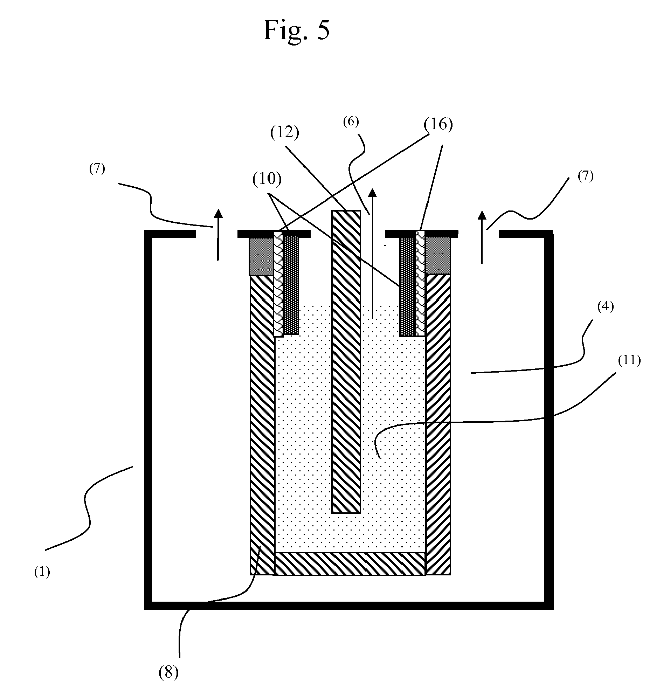

Figure 5 shows that the cathode may be located within a cylindrical GDE or cone GDE containing the electrolyte, and having the target F₂ gas compartment located outside around the cylindrical or cone GDE.

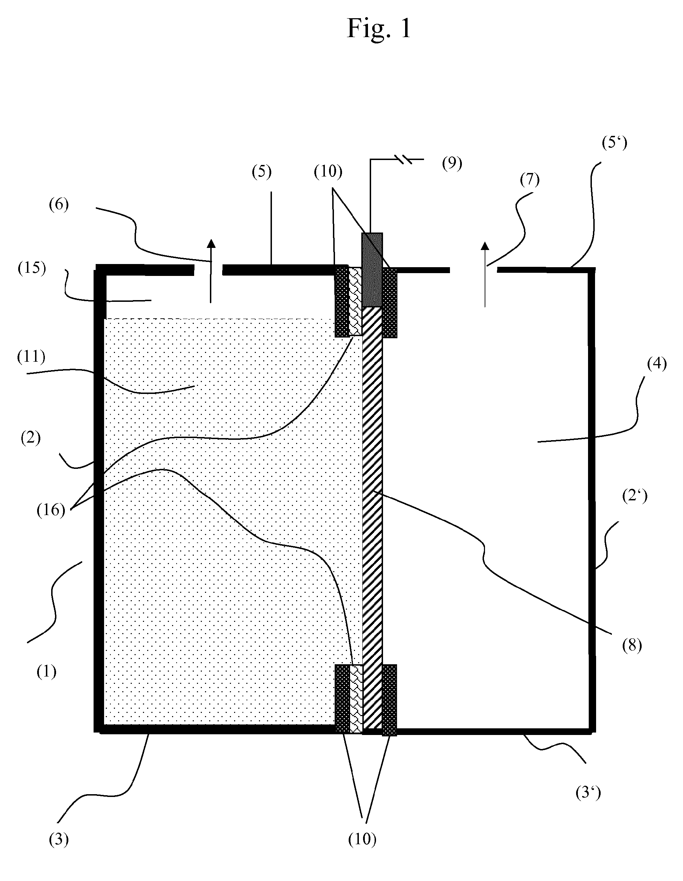

Furthermore, a multitude of several cells, in particular such as shown in Fig. 1 to Fig. 3, may be combined and arranged into a stack cell design.

### Detailed description of the invention

The term "halogen" denotes preferably F₂ and Cl₂, and especially preferably, F₂. In the following, the invention will be explained in view of the preferred embodiment, a cell suitable for the electrolytic manufacture of F₂.

The term "not electrically conducting" or "electrically non-conducting" denotes items which are made from material which is not conductive for electric current, or which, if the material is conductive for electric current, is not connected to a current source and/or is electrically isolated from any electrically conducting part of the cell. The term "conducting" means that a concerned part of the cell is connected to a current source and that an electric current flows.

The term "cell voltage" denotes the voltage (V) measured in the electrolysis cell in relation to a given anode current density (mA/cm²). The components of the cell voltage that sum up to the total cell voltage are: the reversible decompensation voltage; the anode overvoltage; and the cathode overvoltage; the ohmic potential drop (electrodes); ohmic potential drop (electrolyte).

In a preferred embodiment, the cell contains a gas diffusion electrode as anode. The anode preferably is essentially two dimensional, especially in planar or cylindrical, shape, separating the anode gas compartment, e.g. the formed halogen and especially the F₂, and/or the cathode gas compartment, e.g. the formed H₂, from the electrolyte. Skirts or other separation means prevent gas from the gas space over the cathode compartment to pass to the gas space over the anode compartment and vice versa.

Figures 1, 2 and 3 show a cell (1) in which electrically conducting wall (2) and bottom (3) serve as cathode. The electrolyte is indicated by dots. Wall (2') bottom (3') and lid (5') of the anode compartment (4) may or may not be electrically conducting. The anode compartment (4) is free of electrolyte and contains essentially the produced halogen, especially the produced F₂, e.g. in the latter case with some entrained HF vol.-% according to the vapor pressure at the electrolysis temperature of the molten KF-HF-adduct. Lids (5) and (5') close the cathode compartment (11) and the anode compartment (4). Hydrogen formed is withdrawn from the cathode compartment via line (6), F₂ formed is withdrawn via line (7). The gas diffusion electrode (8) is connected via line (9) to a source of electric current. Skirts (10) separate the gas spaces from the gas diffusion electrode (8). In this kind of inventive cell, the F₂ leaving the anode compartment is essentially free of entrained electrolyte. An advantage of using a gas diffusion anode is that the F₂ produced does not contain entrained electrolyte. Of course, the skilled person is well aware that electrically conducting parts of the cell may need to be electrically isolated against other parts of the cell. For example, the groups of cell parts (2), (3) and (5) on the one hand and (2'), (3') and (5') on the other hand are electrically isolated to each other and from the current line (9) for the anode, e.g. by a suitable electrical isolation means (16) between the skirt (10) in the cathode compartment and the GDE (8).

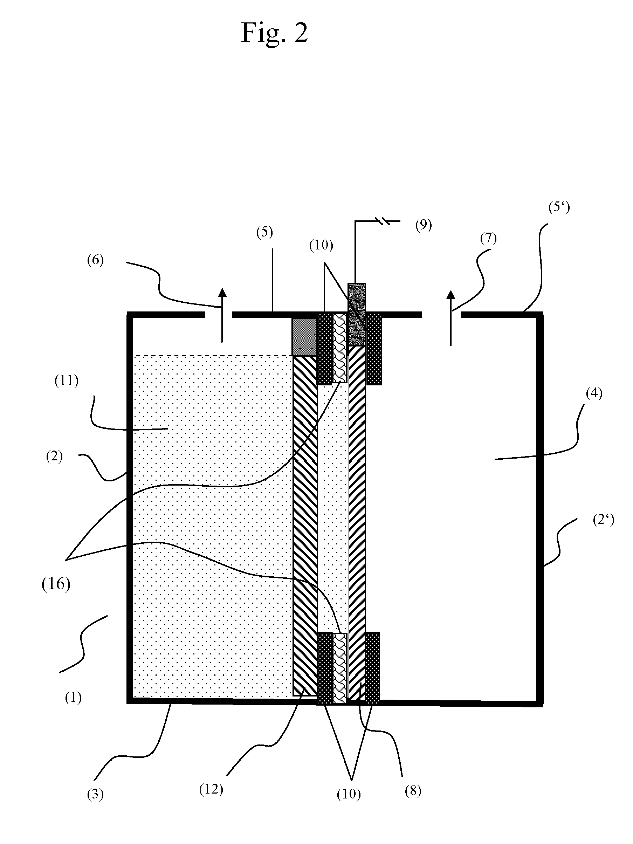

In a preferred embodiment which is shown in Figure 2, the cathode compartment of the cell includes a liquid-permeable, e.g. shutter- shaped carbon electrode, a sheet of perforated or porous metal or a sheet of a liquid-permeable shutter- shaped metal, preferably a sheet of expanded metal (12) as the cathode or as part of the cathode. It is electrically conducting. It is permeable for gases and the electrolyte. For example, the sheet may be a metal plate with holes in it. The shutters or holes are arranged such that gases may leave the sheet in direction of the gas space in the cathode compartment. Preferably, the shutter-shaped or porous metal is an electrically conducting sheet, made of an expanded metal. Expanded metal comprises ribs rising diagonally upwards such that formed H₂ can leave the expanded metal in direction of the cathode compartment. The advantage of such an electrically conducting sheet is that the distance between the cathode, e.g. the sheet which is part of the cathode or forms the cathode, and the anode (8) is shorter - thus more energy effective - without danger that H₂ formed may enter the anode compartment; thus, the cell voltage may be lower due to the shorter distance which saves energy. The other reference signs in figure 2 correspond to those of figure 1. The sheet metal serving as a part of the cathode may, for example, be made from carbon steel, iron, nickel, monel metal, stainless steel or even platinum. Of course, a carbon electrode as known to the skilled person, e.g. such as a porous carbon electrode as mentioned above, can be applied.

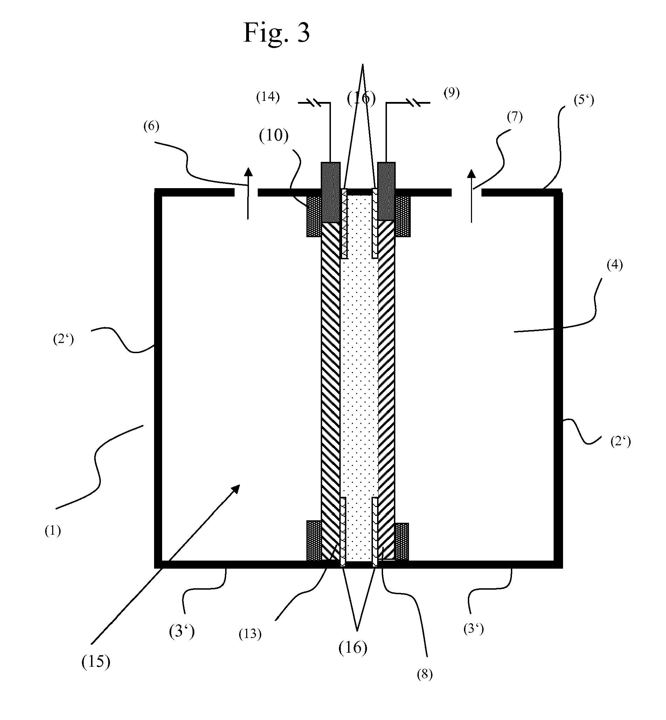

Figure 3 shows a cell wherein both the anode (8) and the cathode (13) are GDE electrodes. Here, both the H₂ formed and the F₂ formed are essentially free of entrained electrolyte.

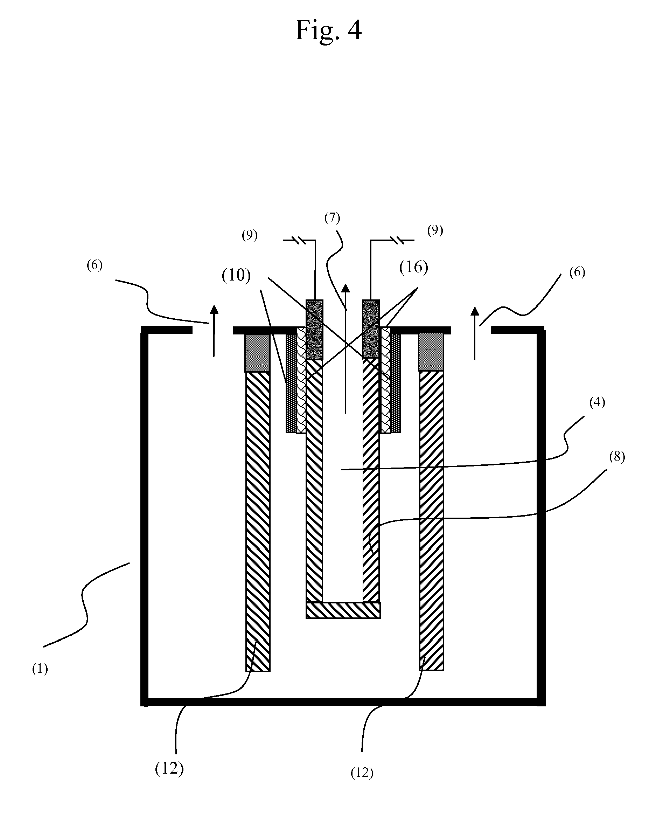

Optionally, a membrane or diaphragm might be built in between the electrodes, especially in the cell types depicted in Figures 1 and 2 or when cells with immersed GDE cylinders as shown in Figure 4 are used. The use of a membrane or a diaphragm in an electrolytic cell is described in more detail in a copending European patent application EP S 2013/47 filed on 11/11/2013.

If desired, a membrane or diaphragm may also be arranged between the anode (8) and the expanded metal sheet (12) forming the cathode.

The distance between expanded metal (12) and GDE anode (8) is rather short. A distance from 0.01to 15 cm gives good results. The gap between expanded metal (12) and GDE anode (8) comprises electrolyte.

A short distance allows for a lower cell voltage to be applied, e.g. starting from 3 V, depending on the particular cell design and e.g. process parameters applied, e.g. electrolyte composition, amperage, temperature, and anode and cathode materials. This saves energy. Practically, the voltage is equal to or higher than about 5 V, e.g. at current densities of about 80 mA/cm². Preferably, the applied voltage is in the range from about 5 to 9 V. Often, it is equal to or lower than about 8.5 V. The skilled person is aware that a voltage of higher than 9 V is possible, but likely with need of leading away thermic energy. For example, the voltage can be easily up to 20 V at increased current densities.

It is preferred to pressurize the molten electrolyte to improve the wettability, e.g. the flow of the electrolyte into the gas diffusion electrode (8) or (13). Often, the pressure applied to the electrolyte is equal to or greater than 1 mbar, especially for example 30 mbar compared to the pressure in the F₂ and/or H₂ gas space (differential pressure). The (differential) pressure applied to the electrolyte can be substantially higher, e.g. up to some bars, for example practically up to a pressure of lower than or equal to 1 bar. The pressure should be selected such that sufficient electrolyte flows into the GDE electrode, e.g. to a desirable degree into the surface of the GDE electrode at the electrolyte side, but without liquid leaving the electrode at the gas side into the anode compartment where the produced halogen, e.g. the fluorine, is collected. Often, a pressurization of 25 to 35 mbar over ambient pressure gives good results, e.g. if the F₂ compartment is at ambient pressure. In an example, if the pressure at the H₂ gas side is 30 mbars higher than at the F₂ side, e.g. with a GDE anode of about 5 mm thickness and a current density of 80 mA/cm², the operating voltage is about 6.6 to 6.7 V, and thus allowing for energy savings of about 30 %. In another example, even at a double current density of 160 mA/cm² is possible and the operating voltage is about 9 V resulting in a doubling of the F₂ productivity at the lower end of the voltage range in a conventional cell.

An electrolyzer apparatus for the production of F₂ may contain more than one electrolytic cell. Preferably, the apparatus contains equal to or more than 2 electrolytic cells. Preferably, it contains equal to or more than 10 cells, or even equal to or more than 15 cells; for example, 2 - 10 cells or 5 - 10 cells, 10 - 20 cells or 15 - 20 cells. Principally, there is no upper limit for the cells provided there is sufficient cooling capacity. Thus, the upper limit may be 40 cells, 60 cells, 80 cells or 100 cells, and even more. In particular, a multitude of several cells may be combined and arranged into a stack cell design.

A general advantage of the electrolyzer cell of the invention, especially in view of its use for the manufacture of F₂ (and H₂) from molten adducts of KF and HF, is that recombination of formed H₂ and F₂ is effectively prevented, because essentially no migration of F₂ and H₂ into the non-desired compartment of the electrolytic cell takes place resulting in, i.a., a current efficiency very close to 100 %, which is higher than observed in known cells, and in a higher safety of the cell.

A gas diffusion electrode suitable as anode in the manufacture of halogens, especially of F₂, may be made in particular from carbon fibre fabrics which are bonded by resins, especially epoxy resins and/or by phenolic resins, and then are pyrolized under oxygen-free conditions, and cut into the desired form and size.

The diaphragm, if applied, may be made of material which in general and at higher temperatures, even at a temperature of equal or more than 80°C, is resistant to the electrolyte and HF, F₂ and H₂. Usually the diaphragm material consists of or comprises polyfluorinated polymers, which may contain hydrogen and/or chlorine, and which are wettable by the electrolyte under cell operating conditions. Suitable materials are, for example, PTFE (polytetrafluoroethylene), PCTFE (polychlorotrifluoroethylene), ECTFE (ethylene chlorotrifluoroethylene), ETFE (ethylene trifluoroethylene), PFA (perfluoroalkoxy), FEP (Fluorinated ethylene propylene), nickel oxide, Al₂O₃, all may be made wettable for the electrolyte. For short term experiments to investigate the GDE cell also PVDF (polyvinylidenedifluoride) may be used. Also the membrane, if applied, is preferably made of material resistant to the electrolyte, HF, F₂ and H₂. Especially suitable materials for the membrane are often ion-conductive functionalized fluorinated polymers, especially functionalized perfluorinated polymers. The membrane may for example be a PTFE (polytetrafluoroethylene) based film made wettable for the electrolyte.

The electrolytic cell may be part of a plant for the manufacture of F₂ used for etching or as chamber cleaning gas in the manufacture of semiconductors, TFTs, photovoltaic cells or in the manufacture of micro-electromechanical systems.

Such a plant constructed according to the skid concept is described in WO 2012/034978.

In such a plant according to the skid concept as described in WO 2012/034978, the F₂ generating cell of the present invention is incorporated in skid 2.

Skid 2 comprising the electrolytic cell or cells contains at least one electrolytic cell. Preferably, it contains at least two electrolytic cells. A multitude of several cells may be combined and arranged into a stack. More preferably, it contains at least 6 electrolytic cells or a stack of these. A skid 2 with 8 electrolytic cells or a stack of these is very suitable. The skid preferably is constructed such that if desired, additional electrolytic cells or cell stacks can be added if the demand for fluorine gas is rising. The cells or cell stacks comprise jackets or cooling plates or the like through which cooling water or heating water can be circulated. If desired, skid 2 can be provided in the form of separate sub-skids 2A, 2B and so on. In these sub-skids, a certain number of electrolytic cells or cell stacks are assembled. The separate sub-skids 2A and 2B (and any other sub-skids) are attached together to form one cell room or cell stack room. Often, the cell room or cell stack room will contain 4, 6 or more cells or stacks, for example, 8 cells or stacks or even more. The advantage of providing several electrolytic cells or stacks is that the shut-off of one or even more cells or stacks for maintenance or repair can be compensated by raising the output of the other cells or stacks. To assemble several sub-skids has the advantage that dimensions can be kept within permissible maximum dimensions for usual road transport. The electrolytic cells or stacks are connected to collectors for the F₂ and the H₂ produced. Skid 2 comprises at least one rectifier to supply DC current to the cell anodes. It has to be noted that each cell or stack may comprise 1 or more GDE anodes. Typically, each cell or stack comprises 20 to 30 GDE anodes. A cable connects each of the GDE anodes with the rectifier. Each cell cathode is connected through one copper cable or aluminum bus bar to the rectifier. One rectifier can supply current to one or more cells or stacks. It is preferred to apply one rectifier per GDE anode. The advantage is that the intensity at each individual anode can be tuned depending on the specific anode characteristics, abnormal situations at a specific anode can be immediately detected allowing the automatic shutdown of the faulty anode while all other anodes and cells continue to produce F₂.

Skid 2 includes a water circuit supplying cooling or heating water to the cooling jackets, cooling plate and the like of the cells or stacks.

Another aspect of the invention concerns the use of a gas diffusion electrode as anode and/or cathode in cells for the electrolytic manufacture of F₂, preferably as a multitude of several cells may be combined and arranged into a stack cell design.

The invention also provides a method for the manufacture of H₂ and Hal₂ wherein Hal₂ denotes Cl₂ or F₂, preferably F₂. According to this method, an electrolyte is filled into an electrolytic cell, the electrolyte is molten and electric current is passed through the electrolyte via the at least one cathode and the at least one anode, wherein an electrolytic cell is provided comprising at least one cathode and at least one anode wherein at least one of the at least one cathode and/or at least one of the at least one is a gas diffusion electrode (8). Formed H₂ and Hal₂ are collected in the cathode compartment and anode compartment, respectively, and are withdrawn from the respective compartment.

Thus, the invention provides method for the manufacture of H₂ and Hal₂ wherein Hal denotes Cl₂ or F₂, preferably F₂, comprising a step of providing at least one cell or stack for the electrolytic manufacture of H₂ and halogens Hal₂ from a molten electrolyte, the cell or stack comprising at least one cathode and at least one anode wherein at least one of the at least one anode is a gas diffusion electrode (8) and/or of the at least one cathode is a gas diffusion electrode (13), providing a molten electrolyte, passing electric current through the cell and withdrawing formed H₂ and Hal₂ from the cell or stack. Optionally, the cell comprises at least one membrane or diaphragm in the at least one cathode compartment. Preferably, the anode is a gas diffusion electrode type anode.

In another preferred embodiment, the cell further comprises at least one gas diffusion electrode type cathode.

The manufacture of H₂ and F₂ is preferred, especially preferably by electrolysis of molten adducts of KF and HF, especially of KF·(1.8-2.3)HF.

Although higher a cell voltage is possible, practically, the cell voltage will be equal or higher than about 3 V, especially in the range of about 3 to 20 V. For example, the cell voltage is in the range from about 5 to about 9 V, and preferably it is equal to or lower than 8.5 V, as described in more detail further above.

Preferably, the electrolyte is pressurized, e.g. in form of a differential pressure between pressure in the F₂ and/or H₂ gas space, as described in more detail above. A range of equal to or more than 1 mbar, especially for example 30 mbar, and often equal to or lower than 50 mbar, as a differential pressure between pressure in the F₂ and/or H₂ gas space, is especially preferred.

The anode is preferably a GDE anode, and F₂ withdrawn from the anode compartment is essentially free of entrained electrolyte.

The method is especially performed in an apparatus which at least comprises an GDE anode. Here, the electrolyte is filled into the cathode compartment, but not into the anode compartment. The anode compartment is initially filled with an inert gas, e.g. air or N₂, or with F₂. Then, F₂ forms during electrolysis and can be withdrawn by respective lines.

According to a preferred embodiment, the cell or a cell stack is incorporated in a plant according to the skid concept described above.

Should the disclosure of any patents, patent applications, and publications which are incorporated herein by reference conflict with the description of the present application to the extent that it may render a term unclear, the present description shall take precedence.

The following example is intended to explain the method of the invention in detail without intending to limit the scope of the invention.

Example 1: Production of F₂ in a test cell

A test cell for the production of F₂ and H₂ from a molten electrolyte having a composition of approximately KF·2HF was provided. The cell had the design of the cell shown in Figure 2. The cathode was formed by a carbon steel, or alternatively by an expanded metal, perforated with holes.

The anode (8) was of the gas diffusion electrode type ("GED anode"). It was made from several layers of carbon fibre fabric which were bound by resin to form a composite which then was pyrolized under oxygen-free condition. The GDE anode had a thickness of 5 mm and an active surface wetted by the electrolyte of 100 cm². The distance between the GDE anode and the cathode was 20 mm.

Liquid KF·2HF electrolyte was filled into the cathode compartment, and the temperature adjusted to keep the electrolyte molten (approximately in a range to about 77 °C to 88 °C).

Cell voltage of 5.9 to 7.9 V was applied (current density of about 20 to 80 mA/cm²), and H₂ formed in the cathode compartment, and F₂ in the anode compartment. The H₂ formed passed through the molten electrolyte into the gas space above the electrolyte in the cathode compartment and was withdrawn through a line.

F₂ was formed in the GDE anode and diffused through the GED anode into the anode compartment which filled with F₂ during the electrolysis.

The F₂ formed was withdrawn from the anode compartment and analyzed. The content of HF was 6 to 10%, and F₂ was essentially free of entrained electrolyte.

The current efficiency and the energy efficiency were better than in observed in conventional F₂ cells, e.g. close to 100 % when the cathode compartment was at a pressure of 30 mbar higher than the F₂ compartment pressure.

Example 2: Production of F₂ in a test cell using a diaphragm

In a variant of the Example 1, a test cell was used wherein the perforated metal cathode (12) was shielded by a diaphragm (not shown in Fig. 2) so that no H₂ bubbles could reach the GDE anode. A sheet of expanded metal made of carbon steel (12) serving as the cathode in the cathode compartment was arranged parallel to the diaphragm, and had a distance of approximately 20 mm to the anode.

Cell voltage of 6 to 8 V was applied (current density of 20 to 80 mA/cm²), and H₂ formed in the cathode compartment, and F₂ in the anode compartment.

The diaphragm prevented H₂ bubbles to arrive at the GDE anode and possibly recombining in the GDE anode with F₂ produced in the GDE anode. The F₂ which was formed in the GDE anode diffused through the GDE anode into the gas space of the anode compartment.

The F₂ formed was withdrawn from the anode compartment and analyzed. The content of HF was 6 to 10%, and essentially free of entrained electrolyte.

The current efficiency and the energy efficiency were better than observed in conventional F₂ cells e.g. close to 100 % when the cathode compartment was at a pressure of 30 mbar higher than the F₂ compartment pressure.

### Reference list:

(1) Electrolytic cell
(2) Wall of cathode compartment
(2') Wall of anode compartment
(3) Bottom of the cathode compartment
(3') Bottom of the anode compartment
(4) Interior space of anode compartment, gas only
(5) Cover lid of cathode compartment
(5') Cover lid of anode compartment
(6) H₂ line out
(7) F₂ line out
(8) GDE anode
(9) Current line for anode
(10) Skirt
(11) Cathode compartment
(12) Sheet of expanded metal, optionally perforated with holes, e.g. especially as an expanded metal cathode
(13) GDE cathode
(14) Current line for cathode
(15) Interior gas space of cathode compartment
(16) Electrically isolating material, e.g. a material which is resistant to H₂ and F₂, e.g. a material selected from PTFE (polytetrafluoroethylene), PFA (perfluoroalkkoxy), FEP (fluorinated ethylene-propylene), PCTFE (polychlorotrifluorethylene), ECTFE (ethylene chlorotrifluorethylene), FKM (FPM by ISO) which are fluoroelastomers as defined in ASTM D1418, other fluorinated elastomers such as perfluoro-elastomers (FFKM) and tetrafluoro ethylene/propylene rubbers (FEPM); examples of FKMs are Tecnoflon® (Solvay), Viton® (DuPont), and of FFKM (FEPM) e.g. Kalrez® (DuPont). Electrolyte, indicated by dots (no reference n°.)

## Claims

1. A cell for the electrolytic manufacture of H₂ and halogens from a molten electrolyte comprising at least one cathode and at least one anode wherein at least one of the at least one anode (8) or of the at least one cathode (13) is a gas diffusion electrode (GDE).

2. The cell of claim 1 wherein the at least one anode is a gas diffusion electrode (8).

3. The cell of claims 1 or 2 which comprises at least one sheet of expanded metal (12) in the at least one cathode compartment of the electrolytic cell (1).

4. The cell of anyone of claims 1 to 3 comprising one sheet of expanded metal (12) forming the cathode.

5. The cell of anyone of claims 1 to 4 wherein the distance between the cathode and anode is in the range of from 0.01 to 15 cm.

6. The cell of anyone of claims 1 to 5 comprising at least one anode compartment (4) which is essentially free of electrolyte.

7. The cell of anyone of claims 1, 2, 5 to 6 which further comprises a at least one gas diffusion electrode type cathode (13).

8. The cell of anyone of claims 1 to 7 wherein the at least one gas diffusion (GDE) anode (8) and/or the at least one gas diffusion (GDE) cathode (13) is made from carbon fibre fabrics which are bonded by resins, preferably bonded by epoxy resins and/or by phenolic resins, and are obtained by pyrolizing under oxygen-free conditions.

9. Use of a gas diffusion electrode as anode and/or cathode in cells for the electrolytic manufacture of halogens, preferably of F₂, preferably as a multitude of several cells, more preferably a multitude of cells that are combined and arranged into a stack cell design.

10. A method for the manufacture of H₂ and Hal₂ wherein Hal₂ denotes Cl₂ or F₂, preferably F₂, comprising a step of providing a cell for the electrolytic manufacture of H₂ and halogens Hal₂ from a molten electrolyte, the cell comprising at least one cathode and at least one anode wherein at least one of the at least one anode is a gas diffusion electrode (8) and/or of the at least one cathode is a gas diffusion electrode (13), providing a molten electrolyte, passing electric current through the cell and withdrawing formed H₂ and Hal₂ from the cell.

11. The method of claim 10 for the manufacture of F₂ from molten adducts of HF and KF, preferably for the manufacture of F₂ from molten adducts of HF and KF wherein the at least one anode is a gas diffusion electrode (8).

12. The method of claim 11 wherein the applied cell voltage is equal or higher than 3 V, preferably in the range of from 3 to 20 V, more preferably in the range of from 5 to 9 V.

13. The method of claim 11 or 12 wherein a pressure is applied to the electrolyte which is equal to or greater than 1 mbar, preferably equal to or greater than 30 mbar, compared to the pressure in the F₂ and/or H₂ gas space, and more preferably that the pressure applied to the electrolyte is in the range of from equal to or greater than 30 mbar up to a pressure of lower than or equal to 1 bar, compared to the pressure in the F₂ and/or H₂ gas space.

14. The method of anyone of claims 11 to 13 wherein the F₂ and/or the H₂ withdrawn from the cell is essentially free of entrained electrolyte.

15. The cell of anyone of claims 1 to 8 wherein a multitude of several cells is combined and arranged into a stack cell design, preferably into a stack cell design mounted on a skid.
